# EUROPEAN PATENT SPECIFICATION

(11) **EP 1 558 440 B1**
(45) Date of publication and mention of the grant of the patent: **20.12.2006**
(21) Application number: 03779326.2
(22) Date of filing: 23.10.2003
(51) Int. Cl.: B29C 67/00

(54) **METHODS AND SYSTEMS FOR PRODUCING A DESIRED APPARENT COLORING IN AN OBJECT PRODUCED THROUGH RAPID PROTOTYPING**
VERFAHREN UND SYSTEME ZUR HERSTELLUNG EINER GEWÜNSCHTEN UND SICHTBAREN FÄRBUNG IN EINEM DURCH RAPID-PROTOTYPING HERGESTELLTEN GEGENSTAND
PROCEDES ET SYSTEMES PERMETTANT DE PRODUIRE UNE COLORATION APPARENTE DESIREE DANS UN OBJET PRODUIT PAR PROTOTYPAGE RAPIDE

(30) Priority: 25.10.2002 US 280755
(43) Date of publication of application: 03.08.2005
(73) Proprietor: Hewlett-Packard Development Company, L.P., Houston, TX 77070 (US)
(72) Inventor: COLLINS, David C., Philomath, OR 97370 (US)
(74) Representative: Jackson, Richard Eric
(86) International application number: PCT/US2003/034104
(87) International publication number: WO 2004/037520

(56) References cited:
- US-A1- 2002 079 601
- US-B1- 6 375 874

## Description

### FIELD OF THE INVENTION

The present invention relates to rapid prototyping. More specifically, the present invention relates to the coloring of objects produced by rapid prototyping.

### BACKGROUND OF THE INVENTION

Rapid prototyping is fast becoming a popular process for manufacturing three-dimensional objects including prototype parts and working tools. Rapid prototyping is a process in which an object, which is described by electronic data, is automatically built from base materials. A principal form of rapid prototyping involves a printing process.

When rapid prototyping uses a printing process, a number of printed planar layers are combined together to form a non-planar, three-dimensional object. Parts are fabricated by printing or ejecting a binder onto a flat bed of powder. Where the binder is ejected, the powder is solidified into a cross section of the object being formed. This printing is performed layer-by-layer, with each layer representing another cross section of the final desired product. Adjacent printed layers are adhered to one another in predetermined patterns to build up the desired product.

In addition to selectively forming each layer of the desired object from the powder in the fabrication chamber, the system can print a color or color pattern on each layer of the object. For example, inkjet printing technology can be employed in which a number of differently colored inks are selectively ejected from the nozzles of a print head and blended on the print medium to provide a full spectrum of colors. On each individual layer, conventional two-dimensional multi-pass printing techniques and half-toning algorithms can be used to hide printing defects and achieve a broad range of desired color hues.

However, these extensions of two-dimensional printing techniques to three-dimensional rapid prototyping are not optimal because they do not take into account the third dimension. In particular, two-dimensional multi-pass printing techniques increase the time required to fabricate a product in a rapid prototyping system. Moreover, two-dimensional, half-toning techniques result in unnecessary color grain in three dimensions.

In previous rapid prototyping systems that employ inkjet technology to add color to the object being fabricated, color has been added by printing a desired color throughout each layer of the object being fabricated. US 2002/0079601 A1 discloses a coloring scheme in accordance with the preamble of claim 1 wherein a band of a first color meets a band of a second color at a corner. A tapered area is formed between the bands of a clear binder so that the bands are perceived as their true color and the perception of each color is impacted less by the presence of the other color in the background, close to the corner.

### SUMMARY OF THE INVENTION

The present invention provides a method of producing a desired apparent coloring in an object produced through rapid prototyping and a method of compensating for non-functioning nozzles of a print head in a rapid prototyping system that uses a printing process to print successive cross sections of an object as recited in the claims.

### BRIEF DESCRIPTION OF THE DRAWINGS

The accompanying drawings illustrate various embodiments of the present invention and are a part of the specification. Together with the following description, the drawings demonstrate and explain the principles of the present invention. The illustrated embodiments are examples of the present invention and do not limit the scope of the invention.

Fig. 1 illustrates a rapid prototyping system that uses a printing process to fabricate desired products. An embodiment of the present invention can be implemented in the system illustrated in Fig. 1.

Fig. 2a illustrates multiple nested shells of potentially different color in an object being fabricated to achieve a desired apparent color according to principles of the present invention.

Fig. 2b illustrates the object being fabricated in Fig. 2a with a section removed to illustrate the layering of color shells in the object's interior according to principles of the present invention.

Fig. 3 is a close-up illustration of the nested shells illustrated in Fig. 2. Fig. 3 is used to show that the shells can each have a variable width or depth.

Throughout the drawings, identical reference numbers designate similar, but not necessarily identical, elements.

### DETAILED DESCRIPTION OF THE PREFERRED EMBODIMENTS

The present invention includes techniques for adding color in a full spectrum of hues, as well as a wide range of saturation and brightness, to an object that is fabricated by a rapid prototyping system that preferably uses printing technology. The present invention recognizes that color is created by reflections from and absorption by colorant at and below the surface of the object depending on the transparency of the material from which the object is fabricated. The present invention also recognizes that the apparent color can be fine-tuned by nesting layers of different colors near the surface of the fabricated object.

As used throughout this specification, and in the appended claims, the term "apparent color" refers to the coloration of the object as it appears to an observer. According to the principles of the present invention, the colorant that contributes to "apparent color" may be located at the actual surface of the object or inside the object and not at the object's surface. Additionally, the object being formed may be partially translucent or transparent with a colored region located inside the object, which has an apparent color. Thus, apparent color refers to the coloration of the object as it appears to an observer, whether that coloration appears at the object's surface or is interior to the object. The "apparent color" is determined by, but potentially independent of, the specific colorants that contribute to the apparent color, where those colorants reside and how those colorants are distributed. The "apparent color" of the object controlled by the embodiments of the present invention includes the chromatic aspects: hue, chroma, lightness, and the geometric aspects: gloss, haze, etc.

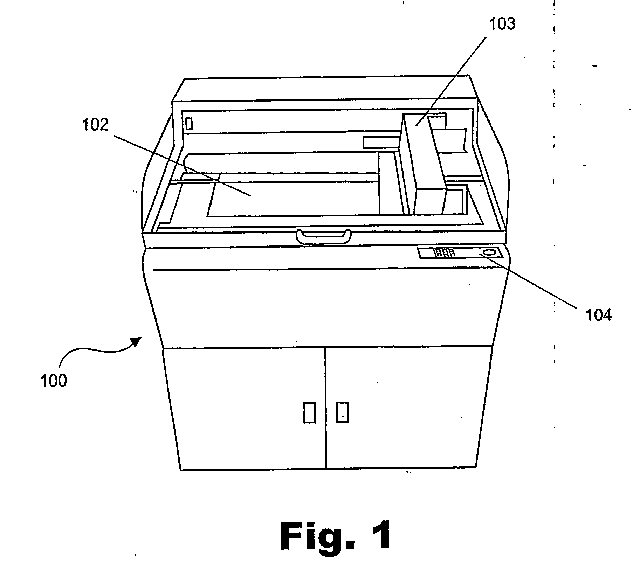

Fig. 1 illustrates one rapid prototyping system that uses printing technology. In the rapid prototyping system (100) of Fig. 1, a powdery material is used to form each individual layer of the desired product. To do this, a measured quantity of powder is first provided from a supply chamber. A roller, preferably incorporated into a moving stage (103), then distributes and compresses the powder at the top of a fabrication chamber (102) to a desired thickness. Then, the print head (103) deposits adhesive or binder onto the powder in the fabrication chamber (102) in a two dimensional pattern. This two dimensional pattern is a cross section of the desired product. The print head (103) may also eject ink, toner or color activator into the layer of powder to provide a desired color or color pattern for this particular cross section of the desired product.

The powder becomes bonded in the areas where the adhesive is deposited, thereby forming a layer of the desired product. The process is repeated with a new layer of powder being applied over the top of the previous layer in the fabrication chamber (102). The next cross section of the desired product is then printed with adhesive or binder into the new powder layer. The adhesive also serves to bind the adjacent or successive layers of the desired product together.

This process continues until the entire object is formed within the powder bed in the fabrication chamber (102). The extra powder that is not bonded by the adhesive is then brushed away leaving the base or "green" object. A user interface or control panel (104) is provided to allow the user to control the fabrication process.

Such a printing process offers the advantages of speedy fabrication and low materials cost. It is considered one of the fastest rapid prototyping methods, and can be performed using a variety of colors.

The print head (103) in the rapid prototyping system (100) often includes inkjet technology for printing color into the layers of the desired object. In inkjet technology, the print head ejects drops of ink in a selective pattern to create the image being printed, or in the case of rapid prototyping, to color the object being fabricated. As used herein and in the attached claims, the term "ink" is used broadly to mean any substance ejected by a print head to color an object being fabricated. Consequently, the term "ink" includes, but is not limited to, ink, printing fluid, toner, colorant, etc.

In rapid prototyping systems that employ inkjet technology to add color to the object being fabricated, color can be added by applying color only to those portions of the cross section being printed at any given time that will be on or adjacent to the surface of the final object. This coloring is preferably projected some depth into the object from the surface to optimally color the object.

Because color can be primarily a surface property, the color projection does not need to proceed very far into the interior of the object being fabricated. The necessary depth of the coloring will depend on the base material being used to fabricate the object. Materials that are more translucent may require projecting the color deeper into the object.

Under principles of the present invention, instead of viewing an object as having a single outer shell of a particular color, the object can be viewed, conceptually, as a series of nested shells of different colors. Shell 0, would be the outermost shell or the shell that includes the actual surface of the object. Shell 1 would be the next shell just inside shell 0. This progression would proceed inward towards the center of the object.

Visually, the actual color of the object will be a combination of the colors of the nested shells. For example, the actual color of the object will be the color of shell 0 plus the color of shell 1, with some attenuation, plus the color of shell 2, with more attenuation, ... plus the color of shell n, with maximum attenuation. Shell n is the innermost shell the color of which can have any effect on the apparent color.

The visual attenuation of each shell will depend on the build material being used. The number of shells an object can have before shell n is reached depends on the translucence of the base material used to fabricate the object. The more opaque the material, the fewer shells will be able to have any effect on the apparent color.

By allowing the colors on the shells to vary from each other, subtle hue shifts can be achieved. Additionally, as will be described below, print defects can be minimized or hidden.

Under the principles of the present invention, the variety of color hues created with halftone patterns in traditional two-dimensional printing can be generated by using variable shell colors in rapid prototyping that uses printing technology. By using solid colors on different shells, hue variations can be created without unnecessary grain.

The actual implementation of selecting appropriate shell colors will be highly dependent on the build material. More color shells can be used on materials that are translucent. If the build material is opaque, then only a few shells will contribute to the actual apparent color. Additionally, the width or depth of each shell can be varied to achieve additional apparent color variation.

By way of further explanation, consider a point on the plane of a powder layer. The color of a point in the plane is determined by the color at that point and the colors of the points adjacent to that point within the same powder layer (half toning). The color of the point is also affected by the color of points nearby in layers above and below. The fact that the color at any given point is affected by the color of all surrounding points is specific to the three-dimensional nature of rapid prototyping.

It should also be noted that the eventual surface of the object being formed may be curved. Consequently, as the shells of color within the object curve with the surface, a perpendicular can be drawn through the surface that also intersects, perpendicularly, all of the image-forming layers or shells which are parallel to each other and parallel to the surface within which they were constructed.

The shell concept of the present invention is advantageous because it can apply to sub-surfaces regardless of the angle that the visible surface makes with the powder layers, i.e., there can be a series of sub-shells behind any surface that is in or on the actual surface of the object. This concept of half-toning in three-dimensions may be referred to as "sub-toning." The nested shells don't have to be in the plane of the successive build layers of powder. Moreover, the shells can be disposed at an angle to, not parallel with, the object surface.

Also, it should be noted that depending on the angle at which one views any point in or on the object fabricated, there will be different portions of the object behind or underneath the point being viewed. Thus, to get the color right from different perspectives one has to make compromises with the coloration of the sub-layers since pixels in the nested sub-layers contribute to the color of more than one surface perspective.

In this specification, controlling apparent "color" implies controlling the chromatic aspects: hue, chroma, lightness, and the geometric aspects: gloss, haze, etc. In the powder-based rapid prototyping systems, the powder is not completely transparent and is somewhat turbid or translucent or opaque. The higher the amount of scattering and the opacity of the powder, the lower the effectiveness of internal layers in determining apparent color.

The present invention provides for the transformation of a colorant deposition algorithm from surface layers to slices. Three-dimensional half toning optimizes the amount and position of colorant in each layer due to a knowledge of the colorant in other layers and a knowledge of the transparency and turbidity of colorants and the media matrix. This would include K-M turbidity theory along with simple Neugebauer type trapping. Specific optimizations depend on turbidity, transparency and spatial positioning. If the powder or colorant contains metallic particles or pearlescent materials, other surface effects can be provided.

Thus, the present invention controls the color of three-dimensional objects by considering colorant color and distribution in three dimensions. Being more specific, the present invention uses layers and binary colorant delivery in layered three-dimensional half toning and controls angular color effects. For example, one must control layers of color to achieve angle dependent effects such as rainbow, metallic or pearlescence. Angular dependence on relative spectral reflectance due to colorant layers can cause unwanted shifts. The present invention can take all these factors into account.

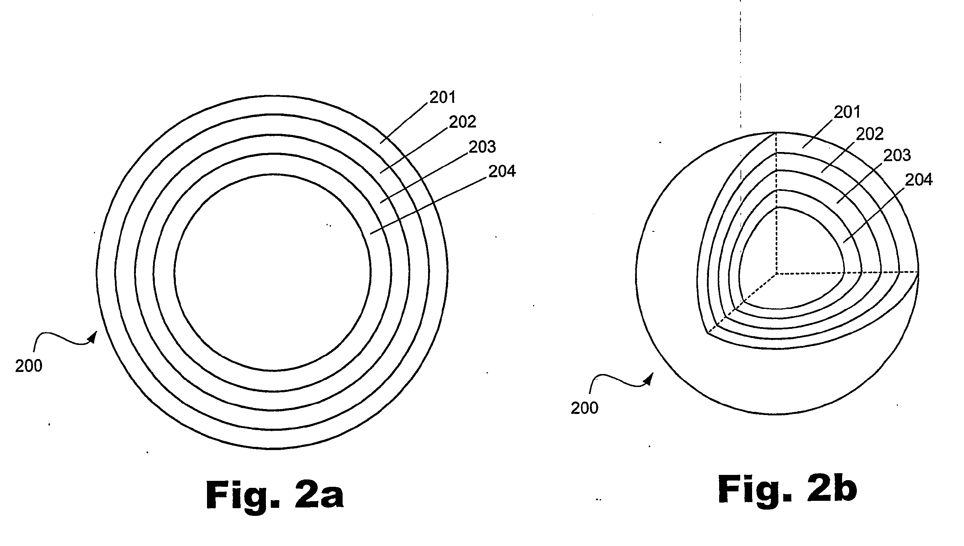

Fig. 2a illustrates a cross section of a generic object being fabricated through rapid prototyping using printing technology. The cross section shown in Fig. 2 could be for a cylinder, an annulus or a sphere. As will be appreciated, this illustrated cross section is only for purposes of explaining principles of the present invention. The present invention can be applied to an object with any type or shape of cross section.

In typical inkjet printing systems, three colors are used and mixed in various ratios as desired to produce the full spectrum of colors. The three colors used are yellow (Y), cyan (C) and magenta (M). Sometimes a supply of black (K) ink is also used. When these colors are blended on the print medium in various ratios, virtually any desired color can be produced. This process of blending base colors to produce other colors is sometimes referred to as half-toning. Similar principles can be used to print in a full spectrum of colors on an object being fabricated through rapid prototyping.

Fig. 2b illustrates the object being fabricated in Fig. 2a with a section removed to illustrate the layering of color shells in the object's interior according to principles of the present invention.

In a first example, the product being fabricated is to have a light magenta apparent color. This can be achieved by half-toning, i.e., printing the outermost shell (201) with a magenta and a clear or white colorant, or depositing only magenta ink at spaced positions over a white build material.

Alternatively, the desired light magenta apparent color can be achieved by nesting a magenta shell with a white shell. This is done by printing a solid magenta color into the outermost shell, shell 0 (201) of the object's cross section (200). In other words, only magenta ink is used to color or print the outermost shell (201) and magenta ink is preferably deposited at all possible print positions. Next, to produce a lighter magenta, a second shell, shell 1 (202), is made 100 % white. This may simply mean leaving the white powder of which the object is being constructed in an uncolored state by using a clear binder. It could also mean printing with a white ink.

The result is a light magenta apparent color for the cross section (200) of the object being formed. If a darker magenta is desired, shell 1 (202) could also be printed or colored with magenta ink. The result would be a darker magenta apparent color than is the case if shell 1 (202) is left or made white.

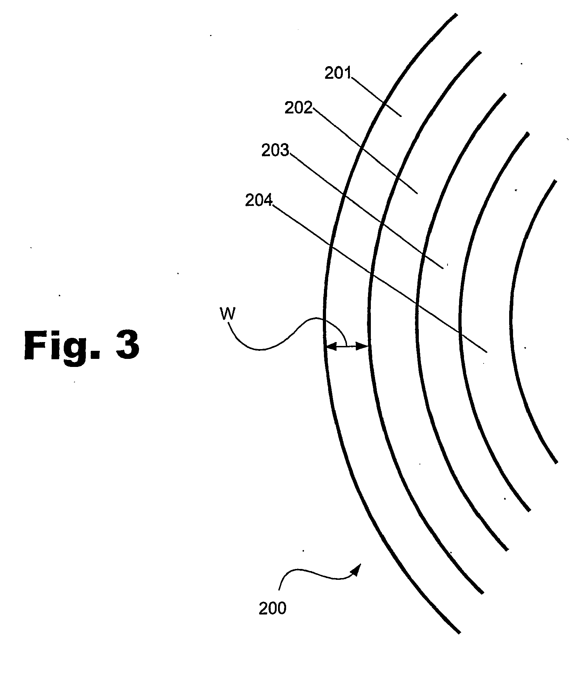

It should be noted that forming two nested shells of the same color is functionally equivalent to simply extending the width or depth of the first shell, e.g., shell 0 (201). As noted above, by varying the widths (e.g., W; Fig. 3) or depths of the shells (e.g., 201-204), additional fine-tuning of the apparent color can be achieved. This is illustrated in Fig. 3.

In a second example, the product being fabricated is to have an apparent color that is black with a slight blue tint. This is achieved by printing the outermost shell, shell 0 (201), with black ink, i.e., shell 0 (201) is 100% black.

Shell 1 (202), the next outermost shell, is formed or printed using blue ink, i.e., shell 1 (202) is 100% blue. In the resulting product, the cross section (200) will have an apparent color that is predominantly black. However, the underlying blue shell (202) will be somewhat visible resulting in the desired surface hue that is black with a slight blue tint.

In these preceding examples, only the two outermost shells (201, 202) have been used to achieve a desired apparent color. However, any number of shells (201-204) can be used to fine-tune the desired apparent color. Preferably, as many as five shells are used to fine-tune the desired hue of the apparent color.

For example, a deep blue can be produced with the following configuration: shell 0 (201) is blue, shell 1 (202) is blue, shell 2 (203) is blue, shell 3 (204) is white. A lighter blue can be produced with the following configuration: shell 0 (201) is blue, shell 1 (202) is blue, shell 2 (203) is white, shell 3 (204) is white. A still lighter blue can be produced with the following configuration: shell 0 (201) is blue, shell 1 (202) is white, shell 2 (203) is white, shell 3 (204) is white.

In another aspect of the present invention, a missing nozzle on the print head (103; Fig. 1) can be compensated for by substituting a nozzle of a different color on the surface shell, and then compensating for the hue shift by adjusting the colors of the nested inner shells in the neighborhood around the missing nozzle on the surface shell.

In a typical inkjet printer that prints on flat media, such as paper, a print defect occurs whenever an ink drop does not land in its expected location. The drop could be either missing or just displaced. Many solutions exist to hide or compensate for these print defects. Many such solutions utilize multiple pass printing in which the print head traverses the area being printed multiple times in an attempt to correctly place an ink drop at each desired location.

Additionally, in color inkjet printing, drops of differently colored inks are deposited, usually in multiple passes of the print head. When the differently colored inks combine on the print medium, they produce a full spectrum of color hues. The color at any particular point on the print medium depends on the ratio of differently colored inks deposited at that point. Again, this technique is sometimes referred to as half-toning.

As noted above, three or more colors are typically used and blended to produce a desired coloration. In the print head (103; Fig 1), there is grouping of nozzles for each point on the print medium that the print head prints at a given time. In this case, the print medium is preferably a powder bed. Within the grouping of nozzles, there is a nozzle for each of the different colors of ink being used. If any one of those nozzles is "missing," meaning that it is malfunctioning by either not ejecting or misdirecting a drop of ink, the print head will be unable to deposit that color of ink at the position covered by the "missing" nozzle.

Under the principles of the present invention, a missing nozzle can be compensated for by depositing a different color using a different nozzle where the missing nozzle cannot print the correct color. Then, in subsequent shells under and around that incorrectly printed spot, colors are printed that will shift the incorrectly printed spot closer to the desired hue for that spot.

The actual implementation of the missing nozzle substitution will be more effective for some colors than for others. Also, it is assumed that the print head is offset or displaced between subsequent layer passes. Thus, a missing nozzle will be positioned at different locations for two adjacent layers or shells.

A similar technique is used to correct for missing nozzles in two-dimensional multi-pass printing. The key difference is that with printing in three dimensions, an actual layer of material may separate one pass from another. If a layer of material separates the multiple passes, then the internal layer may need to have extra colorant to compensate for the missing nozzle on the surface. The amount of additional colorant will depend on the visual attenuation of the build material.

For example, if a light magenta pattern were desired on the surface, this could be achieved, as described above, by forming an outer shell of 100% magenta coloring and an underlying white shell. If, however, one of the magenta nozzles on the print head is missing, that nozzle could be substituted with a clear nozzle, i.e., a nozzle firing a clear fluid or white ink, at the position in shell 0 (201) at which the missing nozzle should have deposited magenta. Then, in the next shell, i.e., shell 1 (202), a different, functioning magenta nozzle would be positioned in registration with the position in shell 0 (201) that was not correctly printed with magenta. This different magenta nozzle then deposits magenta ink in and, perhaps, around the spot on shell 1 (202) that underlies the incorrectly printed spot on the outer shell, shell 0 (201), to compensate for the lost colorant in shell 0.

In another example, if a red color is desired on the surface and a magenta nozzle is missing, then a yellow nozzle could be substituted for the missing magenta nozzle. Magenta would then be used under the yellow spot in one or more internal shells to compensate.

In still another aspect of the present invention, color defects can be randomly hidden by distributing color across multiple shells. For example, if a light magenta color is desired on the surface, the light magenta color could be generated with a half-tone pattern on the surface, as described above, or with nested shells that are uniformly magenta and white, respectively, also as described above. Additionally the light magenta could be generated by printing one halftone pattern on shell 0 (201) and-by printing a different halftone pattern on shell 1 (202).

Variable shell coloring is a useful technique for creating hue changes without using low-density half-tone patterns. Thus, it is a useful technique for creating apparent colors while minimizing half-tone grain and nozzle defects. Also, variable shell coloring is most effective when light apparent colors are desired. It is for light apparent colors that nozzle defects and half-tone grain are most noticeable and objectionable.

The preceding description has been presented only to illustrate and describe the invention. It is not intended to be exhaustive or to limit the invention to any precise form disclosed. Many modifications and variations are possible in light of the above teaching.

For example, in the foregoing the present invention has been described as implemented in a powder-based rapid prototyping system. However, the principles of the present invention are applicable to more than just the powder-based rapid prototyping systems. In particular, several rapid prototyping systems use ink-jet heads to eject a photopolymer. Thus, these ink-jet systems eject 100% of the material used to create the prototype or desired product instead of just the binder. However, even though such a system is depositing the material for the desired product as well as the color, the coloration of objects can be accomplished in exactly the same manner as described above in a powder and binder system. In fact, the jetted polymer rapid prototyping systems often use a very translucent construction material, and hundreds of color layers or shells could be used to achieve a desired apparent color.

In addition to the jetted polymer rapid prototyping systems, the principles of the present invention can be incorporated into a fused deposition rapid prototyping system when a translucent polymer is used as the construction material.

The preferred embodiment was chosen and described in order to best illustrate the principles of the invention and its practical application. The preceding description is intended to enable others skilled in the art to best utilize the invention in various embodiments and with various modifications as are suited to the particular use contemplated. It is intended that the scope of the invention be defined by the following claims.

## Claims

1. A method of producing a desired apparent coloring in an object (200) produced through rapid prototyping, wherein said rapid prototyping comprises printing technology, said method being **characterised in** comprising:
varying a color of successive layers (201,202,203, and 204) that are nested inwardly from a surface of said object (200) by:
printing a first color in a first, outermost layer (201) of a cross section of said object (200); and
printing a second color in a second layer (202) of said cross section of said object (200), said second layer (202) being inside said first, outermost layer (201).

2. The method of claim 1, wherein said first color and said second color are the same color.

3. The method of claim 2, further comprising:
printing a third color in a third layer (203) of said cross section of said object;
printing a fourth color in a fourth layer (204) of said cross section of said object; and
printing a fifth color in a fifth layer of said cross section of said object.

4. The method of claim 1, wherein said first and second colors are different colors and each is printed by half-toning using two or more differently colored inks.

5. The method of claim 1, further comprising varying a depth (W) of one or more of said successive layers (201,202, 203, and 204).

6. The method of claim 1, wherein said rapid prototyping system (100) is a jetted polymer system or a fused deposition rapid prototyping system.

7. A method of compensating for non-functioning nozzles of a print head (103) in a rapid prototyping system (100) that uses a printing process to print successive cross sections (201,202, 203,204) of an object (200) being fabricated, said method comprising:
at a point on a build material where said non-functioning nozzle is to deposit a drop of ink, firing a second, functioning nozzle to deposit a drop of ink of a color different than would have been deposited by said non-functioning nozzle;
displacing said print head (103); and
at a spot, deeper inside a surface of said object being formed, printing a color under said point that compensates for said deposited drop of ink being of a color different than would have been deposited by said non-functioning nozzle.

## Patentansprüche

1. Ein Verfahren zum Erzeugen einer gewünschten sichtbaren Färbung bei einem Objekt (200), das durch eine Schnellprototypherstellung erzeugt wird, wobei die Schnellprototypherstellung eine Drucktechnologie aufweist, wobei das Verfahren **dadurch gekennzeichnet ist, dass** dasselbe folgende Schritte aufweist:
Variieren einer Farbe von aufeinander folgenden Schichten (201, 202, 203 und 204), die von einer Oberfläche des Objekts (200) nach innen ineinander angeordnet sind, durch:
Drucken einer ersten Farbe bei einer ersten, äußersten Schicht (201) eines Querschnitts des Objekts (200); und
Drucken einer zweiten Farbe bei einer zweiten Schicht (202) des Querschnitts des Objekts (200), wobei die zweite Schicht (202) sich innerhalb der ersten, äußersten Schicht (201) befindet.

2. Das Verfahren gemäß Anspruch 1, bei dem die erste Farbe und die zweite Farbe die gleiche Farbe sind.

3. Das Verfahren gemäß Anspruch 2, das ferner folgende Schritte aufweist:
Drucken einer dritten Farbe bei einer dritten Schicht (203) des Querschnitts des Objekts;
Drucken einer vierten Farbe bei einer vierten Schicht (204) des Querschnitts des Objekts; und
Drucken einer fünften Farbe bei einer fünften Schicht des Querschnitts des Objekts.

4. Das Verfahren gemäß Anspruch 1, bei dem die erste und die zweite Farbe unterschiedliche Farben sind und jede durch eine Halbtongebung unter Verwendung von zwei oder mehr unterschiedlich gefärbten Tinten gedruckt wird.

5. Das Verfahren gemäß Anspruch 1, das ferner ein Variieren einer Tiefe (W) von ein oder mehr der aufeinander folgenden Schichten (201, 202, 203 und 204) aufweist.

6. Das Verfahren gemäß Anspruch 1, bei dem das Schnellprototypherstellungssystem (100) ein Strahlpolymersystem oder ein Schmelzaufbringungsschnellprototypherstellungssystem ist.

7. Ein Verfahren zum Kompensieren von nicht funktionierenden Düsen eines Druckkopfes (103) bei einem Schnellprototypherstellungssystem (100), das einen Druckprozess verwendet, um aufeinander folgende Querschnitte (201, 202, 203, 204) eines Objekts (200) zu drucken, das hergestellt wird, wobei das Verfahren folgende Schritte aufweist:
an einem Punkt an einem Baumaterial, an dem die nicht funktionierende Düse einen Tropfen Tinte aufbringen soll, Abfeuern einer zweiten, funktionierenden Düse, um einen Tropfen Tinte einer anderen Farbe aufzubringen, als durch die nicht funktionierende Düse aufgebracht worden wäre;
Verschieben des Druckkopfes (103); und
an einer Stelle tiefer innerhalb einer Oberfläche des Objekts, das gebildet wird, Drucken einer Farbe unter dem Punkt, die kompensiert, dass der aufgebrachte Tropfen Tinte eine andere Farbe hat, als durch die nicht funktionierende Düse aufgebracht worden wäre.

## Revendications

1. Procédé pour produire une coloration apparente désirée dans un objet (200) produit par prototypage rapide, dans lequel ledit prototypage rapide comprend une technologie d'impression, ledit procédé étant **caractérisé en ce qu'**il consiste à :
faire varier une couleur de couches successives (201, 202, 203 et 204) qui sont imbriquées vers l'intérieur à partir d'une surface dudit objet (200) ;
imprimer une première couleur dans une première couche la plus externe (201) d'une section transversale dudit objet (200) ; et
imprimer une deuxième couleur dans une deuxième couche (202) de ladite section transversale dudit objet (200), ladite deuxième couche (202) étant à l'intérieur de ladite première couche la plus externe (201).

2. Procédé selon la revendication 1, dans lequel ladite première couleur et ladite deuxième couleur sont les mêmes.

3. Procédé selon la revendication 2, consistant en outre à :
imprimer une troisième couleur dans une troisième couche (203) de ladite section transversale dudit objet (200) ;
imprimer une quatrième couleur dans une quatrième couche (204) de ladite section transversale dudit objet (200) ;
et
imprimer une cinquième couleur dans une cinquième couche de ladite section transversale dudit objet (200).

4. Procédé selon la revendication 1, dans lequel lesdites première et deuxième couleurs sont des couleurs différentes et chacune est imprimée par demi-teintes en utilisant deux encres différemment colorées ou plus.

5. Procédé selon la revendication 1, consistant en outre à faire varier une profondeur (W) d'une ou plusieurs des couches successives (201, 202, 203 et 204).

6. Procédé selon la revendication 1, dans lequel ledit système de prototypage rapide (100) est un système polymère par déposition fondue.

7. Procédé de compensation pour des buses hors service d'une tête d'impression (103) dans un système de prototypage rapide (100) qui utilise un processus d'impression pour imprimer des sections transversales successives (201, 202, 203, 204) d'un objet (200) qui est fabriqué, ledit procédé consistant à :
en un point sur un matériau de construction où ladite buse hors service doit déposer une goutte d'encre, déclencher une deuxième buse en service pour déposer une goutte d'encre d'une couleur différente que celle qui aurait déposée par ladite buse hors service ;
déplacer ladite tête d'impression (103) ; et
en un point, plus profond à l'intérieur d'une surface dudit objet qui est formé, imprimer une couleur sous ledit point qui compense ladite goutte d'encre déposée qui est d'une couleur différente de celle qui aurait déposée par ladite buse hors service.
